# EUROPEAN PATENT SPECIFICATION

(11) **EP 3 502 818 B1**
(45) Date of publication and mention of the grant of the patent: **02.09.2020**
(21) Application number: 16916240.1
(22) Date of filing: 15.09.2016
(51) Int. Cl.: G05B 23/02, G06K 9/62

(54) **OPERATIONAL STATUS CLASSIFICATION DEVICE**
BETRIEBSZUSTANDSKLASSIFIZIERUNGSVORRICHTUNG
DISPOSITIF DE CLASSIFICATION D'ÉTAT DE FONCTIONNEMENT

(43) Date of publication of application: 26.06.2019
(73) Proprietor: Mitsubishi Electric Corporation, Chiyoda-ku Tokyo 100-8310 (JP)
(72) Inventor: KURIYAMA, Toshiyuki, Tokyo 100-8310 (JP)
(74) Representative: Pfenning, Meinig & Partner mbB
(86) International application number: PCT/JP2016/077267
(87) International publication number: WO 2018/051458

(56) References cited:
- JP-A- 2013 206 363
- JP-A- 2013 206 363
- JP-A- 2013 218 725
- US-A1- 2006 269 144
- STEPHAN SPIEGEL ET AL: "Pattern recognition and classification for multivariate time series", PROCEEDINGS OF THE FIFTH INTERNATIONAL WORKSHOP ON KNOWLEDGE DISCOVERY FROM SENSOR DATA, SENSORKDD '11, 21 August 2011 (2011-08-21), pages 34-42, XP055606463, New York, New York, USA DOI: 10.1145/2003653.2003657 ISBN: 978-1-4503-0832-8
- Vorgelegt Von ET AL: "Time Series Distance Measures Segmentation, Classification, and Clustering of Temporal Data", , 27 July 2015 (2015-07-27), XP055414862, Retrieved from the Internet: URL:https://depositonce.tu-berlin.de/bitst ream/11303/4916/2/spiegel_stephan.pdf [retrieved on 2017-10-11]
- Janos Abonyi ET AL: "Principal Component Analysis based Time Series Segmentation - A New Sensor Fusion Algorithm", , 16 November 2004 (2004-11-16), pages 1-23, XP055325695, Retrieved from the Internet: URL:https://static.aminer.org/pdf/PDF/000/ 222/117/time_series_segmentation_and_symbo lic_representation_from_process_monitoring _to.pdf [retrieved on 2016-12-02]
- Marina Milanovic ET AL: "Algorithmic methods for segmentation of time series: An overview", , 31 January 2014 (2014-01-31), XP055606452, Retrieved from the Internet: URL:https://www.researchgate.net/profile/M ilan_Stamenkovic/publication/317099241_Alg orithmic_methods_for_segmentation_of_time_ series_An_overview/links/5925fc96458515e3d 4537b5f/Algorithmic-methods-for-segmentati on-of-time-series-An-overview.pdf [retrieved on 2019-07-17]

## Description

### TECHNICAL FIELD

The present invention relates to an operational status classification device for classifying, for respective operational statuses, sensor data acquired from sensors installed in control apparatuses in a control system such as an elevator, a plant device, and an air conditioner.

### BACKGROUND ART

In apparatuses such as elevators, plant devices, and air conditioners, a control technique is known in which a failure is detected by comparing a measurement value acquired by a sensor installed in an apparatus with a threshold value predetermined for each sensing property.

Among various apparatuses, however, there are apparatuses that have various operational statuses in accordance with the environment in which the apparatus is installed, the model of the apparatus, the state of usage, etc. In that case, in the above control technique, when a measurement value of a specific sensing property exceeds a threshold value, it is quite difficult to determine whether it is due to a failure of the apparatus, that is, due to an abnormality or due to a change in the operational status.

Meanwhile, for example, Patent Literature 1 discloses a technology for detecting a failure by storing previous operation rates determined by dividing a plurality of factors such as time and outside air temperature at a predetermined width for each operation condition and comparing the previous and current operation rates for each operation condition.

The article "Pattern recognition and classification from multivariate time series" by Stephan Spiegel et al., published in the proceedings of the Fifth International Workshop on Knowledge Discovery from Sensor Data on August 27, 2011, New York, New York, USA, is concerned with the recognition of recurring patterns within multivariate time series, which capture the evolution of multiple parameters over a certain period of time. The proposed approach first separates a time series into segments that can be considered as situations, and then clusters the recognized segments into groups of similar context. The time series segmentation is established in the bottom-up manner according to the correlation of the individual signals. Recognized segments are grouped in terms of statistic features using agglomerative hierarchical clustering. In order to find entirely homogeneous segments from a given time series, a cost function based on the distance between the actual values of the time series and a simple function fitted to the data of each segment is proposed. So, the cost function is based on the distance of the values. Accordingly, in the article, the authors "use the Q-measure as an indicator for homogeneity of individual or rather merged segments" in terms of the data values, and not the data timing.

### CITATION LIST

### PATENT LITERATURES

Patent Literature 1: JP H11-161318 A (JP 1999-161318A)

### SUMMARY OF INVENTION

### TECHNICAL PROBLEM

However, as in the technique disclosed in Patent Document 1, the operation condition determined by dividing the respective factors only enables classification of conditions based on whether values of the respective factors are close. Thus, there is a problem that it is not possible to classify target sensor data, for example, the operation rates in Patent Literature 1, with properly partitioning operational statuses of a control apparatus into a plurality of statuses, the operational statuses being similar within each of the plurality of statuses. For example, even in a case where pieces of sensor data belong to inherently similar operational status, when the pieces of sensor data are not within a predetermined division width of each of the factors, those pieces of sensor data may be classified as sensor data of different operational statuses. Conversely, even in a case where pieces of sensor data belong to different operational statuses, when the pieces of sensor data of the different operational statuses are within a division width of each of the factors, those pieces of sensor data may be classified as sensor data of a similar operational status.

The present invention has been devised in order to solve the above problem, and it is an object of the present invention to provide an operational status classification device capable of classifying operational statuses of a control apparatus into a plurality of statuses, the operational statuses being similar within each of the plurality of statuses.

### SOLUTION TO PROBLEM

An operational status classification device according to the present invention includes: a to-be-classified data generating unit generating to-be-classified data from a plurality of pieces of sensor data collected from an apparatus; a division candidate selecting unit selecting, as division candidates, candidates of boundary lines used to divide a value range of the to-be-classified data generated by the to-be-classified data generating unit; a connection density calculating unit calculating, for each of the division candidates selected by the division candidate selecting unit, a connection density representing closeness of collection timings between pieces of the to-be-classified data divided by each of the division candidates; and a classifying unit extracting division candidates to be used for classifying the operational statuses from among the division candidates using the connection density calculated by the connection density calculating unit, and classifying pieces of the to-be-classified data into respective operational statuses by dividing the value range of the to-be-classified data using the extracted division candidates.

### ADVANTAGEOUS EFFECTS OF INVENTION

An operational status classification device of the present invention is capable of classifying operational statuses of a control apparatus into a plurality of statuses, the operational statuses being similar within each of the plurality of statuses, by reflecting the feature of a control apparatus that, when pieces of sensor data are within a predetermined division width of each factor, the pieces of sensor data belong to similar operational status.

### BRIEF DESCRIPTION OF DRAWINGS

FIG. 1 is a configuration diagram of a sensor data classifying system for causing an operational status classification device according to a first embodiment of the present invention to classify sensor data collected from a monitoring target in facilities on the basis of an operational status;
FIG. 2 is a configuration diagram of the operational status classification device according to the first embodiment of the present invention;
FIG. 3 is a flowchart for explaining the operation of the operational status classification device according to the first embodiment of the present invention;
FIG. 4 is a graph for explaining an example of a method of selecting division candidates by a division candidate selecting unit in the first embodiment;
FIG. 5 is a graph for explaining another example of the method of selecting division candidates by the division candidate selecting unit in the first embodiment;
FIG. 6 is a flowchart illustrating the operation of a connection density calculating unit for calculating connection densities in the first embodiment in detail;
FIG. 7 is a diagram for explaining an example in which the connection density calculating unit connects samples in time series on to-be-classified data in the first embodiment;
FIG. 8 is a diagram for explaining another example in which the connection density calculating unit connects samples in time series on to-be-classified data in the first embodiment;
FIG. 9 is a diagram illustrating an example of the concept of connecting and traversing between samples in the first embodiment;
FIG. 10 is a diagram for explaining an example of an operation of adding a connection density as weight to a division candidate when the connection density calculating unit connects samples and a connection line of the connected samples traverses the division candidate;
FIG. 11 is a diagram for explaining an example of the concept of samples in a state in which an apparatus is stable in the first embodiment, FIG. 11A is an example of samples in a stable state, and FIG. 11B is an example of samples in an unstable state;
FIG. 12 is a flowchart for explaining in detail the operation of a classifying unit for classifying to-be-classified data into respective operational statuses in the first embodiment;
FIG. 13 is a table for explaining an example of a method performed by the classifying unit for extracting division candidates on the basis of a preset ratio p in the first embodiment;
FIG. 14 is a graph for explaining an example of a method performed by the classifying unit for extracting boundary lines used for actual classification of operational statuses in the first embodiment;
FIG. 15 is a graph for explaining another example of a method performed by the classifying unit for extracting boundary lines used for actual classification of operational statuses in the first embodiment;
FIG. 16 is a graph illustrating an image of an example in which a value range of to-be-classified data is divided by the classifying unit in the first embodiment;
FIG. 17 is a graph illustrating an image of an example in which the classifying unit assigns operational status numbers to classified samples belonging to respective divided sections in the first embodiment; and
FIGS. 18A and 18B are diagrams illustrating an example of hardware configurations of the operational status classification device according to the first embodiment of the present invention.

### DESCRIPTION OF EMBODIMENTS

Hereinafter, some embodiments of the present invention will be described in detail with reference to the drawings.

### First Embodiment

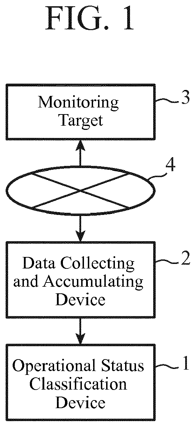

FIG. 1 is a configuration diagram of a sensor data classifying system for causing an operational status classification device 1 according to a first embodiment of the present invention to classify sensor data collected from monitoring targets in facilities in accordance with an operational status.

As illustrated in FIG. 1, the sensor data classifying system includes a monitoring target 3, a data collecting and accumulating device 2, and an operational status classification device 1.

The monitoring target 3 includes apparatuses such as an air conditioner, an elevator, and a plant device. The monitoring target 3 may be configured by connecting more than one apparatuses such as all the air conditioning units in a building.

The monitoring target 3 and the data collecting and accumulating device 2 are connected via a sensor network 4. The data collecting and accumulating device 2 collects and accumulates continuously or intermittently a set of measurement values output from various sensors installed in apparatuses of the monitoring target 3 via the sensor network 4. Note that a set of measurement values, which are instantaneous values, collected from a plurality of various sensors installed in the apparatuses of the monitoring target 3 is herein referred to as sensor data.

Specifically, a data collecting unit (not illustrated) of the data collecting and accumulating device 2 collects a set of measurement values from the various sensors installed in the apparatuses of the monitoring target 3 as sensor data and accumulates the sensor data together with collection date and time in a sensor data accumulating database (DB) 21.

The sensor data accumulating DB 21 will be described later.

On the basis of the plurality of pieces of sensor data accumulated in the sensor data accumulating DB 21 by the data collecting and accumulating device 2, the operational status classification device 1 classifies the plurality of pieces of sensor data collected from the monitoring target 3 into respective operational statuses and accumulates as classified sensor data. An administrator or the like of facilities such as a building monitors the operational status such as deterioration or failure of the monitoring target 3 on the basis of the classified sensor data accumulated in the operational status classification device 1.

Note that, as illustrated in FIG. 1, it is assumed that the monitoring target 3 and the data collecting and accumulating device 2 are connected via the sensor network 4; however, the present invention is not limited thereto. The monitoring target 3 and the data collecting and accumulating device 2 may be directly connected without being connected to the sensor network 4.

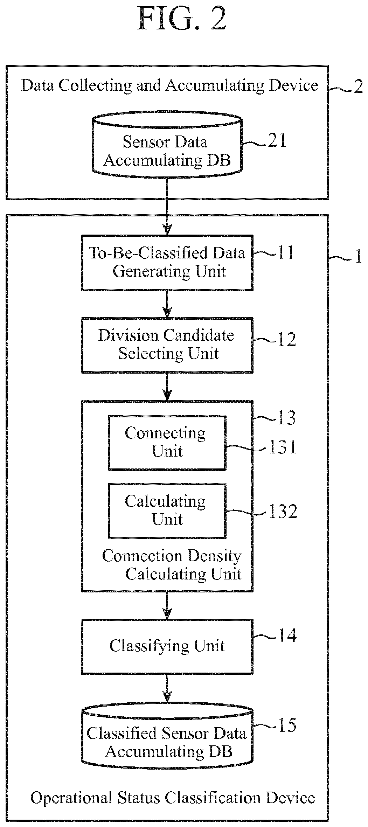

FIG. 2 is a configuration diagram of the operational status classification device 1 according to the first embodiment of the present invention.

As illustrated in FIG. 2, the operational status classification device 1 includes a to-be-classified data generating unit 11, a division candidate selecting unit 12, a connection density calculating unit 13, a classifying unit 14, and a classified sensor data accumulating DB 15. The connection density calculating unit 13 includes a connecting unit 131 and a calculating unit 132.

The to-be-classified data generating unit 11, with reference to the sensor data accumulating DB 21, generates to-be-classified data used for classification of operational statuses on the basis of all the sensor data.

In the sensor data accumulating DB 21, a sensing property, values of which are to be measured by the various sensors installed in the monitoring target 3, and measurement values measured for the sensing properties are accumulated as sensor data of one record for each date and time of collection. In the first embodiment, the to-be-classified data generating unit 11 extracts measurement values of the predetermined target sensing property that are included in each piece of such sensor data from the sensor data, that is, data of the target sensing property, and extracts or generates the to-be-classified data on the basis of the extracted data of the sensing property.

Here, the data of the target sensing property to be extracted from the sensor data when the to-be-classified data generating unit 11 generates the to-be-classified data is also referred to as to-be-classified data generation data. That is, when acquiring sensor data from the sensor data accumulating DB 21, the to-be-classified data generating unit 11 extracts to-be-classified data generation data from the acquired sensor data and extracts or generates to-be-classified data from the extracted to-be-classified data generation data.

Note that the to-be-classified data generating unit 11 acquires the sensor data with which information of collection date and time of the sensor data is associated from the sensor data accumulating DB 21 and extracts or generates the to-be-classified data from the acquired sensor data.

Moreover, it is assumed here that the to-be-classified data generating unit 11 generates the to-be-classified data by extracting, for example, data of a preset sensing property out of sensor data in a predetermined period from among all the sensor data accumulated in the sensor data accumulating DB 21. A predetermined sensing property is a sensing property to be used for failure determination, such as "air outlet temperature" in the case where the monitoring target 3 is an air conditioner, and is preset by an administrator or the like of the monitoring target 3. That is, from sensor data in a predetermined period, the to-be-classified data generating unit 11 extracts, for example, data of the sensing property "air outlet temperature" as to-be-classified data generation data, and obtains the data of "air outlet temperature", which is extracted as the to-be-classified data generation data, as the to-be-classified data. Note that the to-be-classified data generating unit generates the to-be-classified data by assigning information of date and time when the sensor data is collected to the data of the sensing property.

The to-be-classified data is not limited to the above example, and for example, the to-be-classified data generating unit 11 may generate to-be-classified data by calculating data that is considered as a feature amount of the apparatus, such as a value obtained by linearly combining pieces of data of respective sensing properties, from the plurality of pieces of sensor data accumulated in the sensor data accumulating DB 21. That is, for example, the to-be-classified data generating unit 11 may extract pieces of data of the respective sensing properties as pieces of to-be-classified data generation data from the plurality of pieces of sensor data and generate a value obtained by linearly combining the extracted pieces of to-be-classified data generation data as the to-be-classified data.

Alternatively, the to-be-classified data generating unit 11 may calculate one-dimensional data by a dimension compression method such as main component analysis or singular value decomposition and generate to-be-classified data from the calculated one-dimensional data. That is, the to-be-classified data generating unit 11 may obtain, as the to-be-classified data, a main component calculated on the basis of data of predetermined sensing properties out of data of sensing properties included in respective pieces of sensor data in a predetermined period.

The to-be-classified data generating unit 11 outputs the generated to-be-classified data to the division candidate selecting unit 12.

Note that the to-be-classified data generating unit 11 stores, as data not used for to-be-classified data, data other than the data of the predetermined sensing property out of the data of sensing properties included in the sensor data in the predetermined period acquired from the sensor data accumulating DB 21 for generation of to-be-classified data, that is, data of sensing properties not extracted as the to-be-classified data generation data as the data not used for to-be-classified data in association with the date and time when the sensor data is collected. Alternatively, the to-be-classified data generating unit 11 may discard data that is not used for to-be-classified data when it is not used by the connection density calculating unit 13.

Note that the storage area of the data not used for to-be-classified data, when the to-be-classified data generating unit 11 stores such data, is only required to allow at least the connection density calculating unit 13 to refer to the area. The connection density calculating unit 13 will be described later.

The division candidate selecting unit 12 selects, as division candidates, boundary lines serving as candidates of boundary lines for dividing a value range of the to-be-classified data acquired by the to-be-classified data generating unit 11. Note that, in the first embodiment, the classifying unit 14 classifies the to-be-classified data into respective operational statuses by dividing the value range of the to-be-classified data.

As described above, it is assumed here that to-be-classified data is data of a sensing property included in extracted sensor data. Therefore, to classify the to-be-classified data means to classify its original sensor data.

Note that even in a case where to-be-classified data is generated by other methods, by classifying the to-be-classified data, its original sensor data can be classified.

The division candidate selecting unit 12 selects, as a division candidate, a candidate of a boundary line which may be used for dividing the to-be-classified data for classification into respective operational statuses by the classifying unit 14. Details of the classifying unit 14 will be described later.

The division candidate selecting unit 12 outputs the information of the selected division candidates to the connection density calculating unit 13.

The connection density calculating unit 13 calculates the strength of temporal connection of all the division candidates selected by the division candidate selecting unit 12. As for the operational status, as a feature of a control apparatus, there is a feature that data close in time belongs to similar operational statuses unless manual operation or change in control contents occurs. The strength of temporal connection of division candidates represents such a feature of a control apparatus and is the strength representing the closeness of collection timings between pieces of to-be-classified data divided by each of the division candidates. Here, the strength of temporal connection for each division candidate is referred to as connection density. That is, the connection density calculating unit 13 calculates connection densities.

Specifically, the connecting unit 131 of the connection density calculating unit 13 connects the to-be-classified data in consideration of time series of collection timings of the to-be-classified data. Then, in the case where a connection line connected by the connecting unit 131 traverses the division candidate selected by the division candidate selecting unit 12, the calculating unit 132 of the connection density calculating unit 13 adds a weight value to the division candidate traversed by the connection line and derives the addition result of the weight values for each of the division candidates as connection density of each of the division candidates.

The connection density calculating unit 13 outputs the information of the calculated connection densities to the classifying unit 14.

The classifying unit 14 classifies the to-be-classified data into operational statuses using the connection density for each of the division candidates calculated by the connection density calculating unit 13. Specifically, the classifying unit 14 extracts division candidates, that is, boundary lines, to be actually used for classification of operational statuses, from all the division candidates selected by the division candidate selecting unit 12 using the connection density for each of the division candidates and generates classification for each operational status by dividing the value range of the to-be-classified data at the extracted boundary lines. Then, the classifying unit 14 assigns an operational status number to each classification and accumulates the to-be-classified data assigned with the operational status number in the classified sensor data accumulating DB 15.

The classified sensor data accumulating DB 15 accumulates the to-be-classified data assigned with the operational status numbers.

Note that, as illustrated in FIG. 2, the operational status classification device 1 includes the classified sensor data accumulating DB 15 in this example. However, the configuration is not limited thereto, and the classified sensor data accumulating DB 15 may be provided externally to the operational status classification device 1.

The operation will be described.

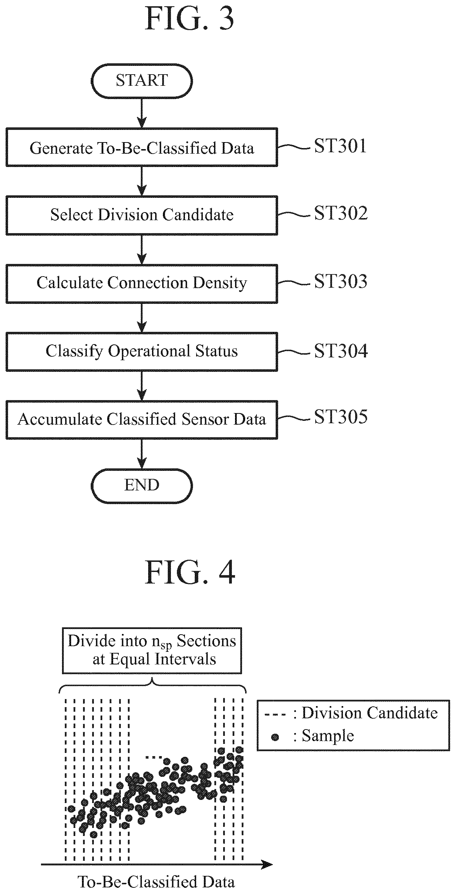

FIG. 3 is a flowchart for explaining the operation of the operational status classification device 1 according to the first embodiment of the present invention.

The to-be-classified data generating unit 11 generates to-be-classified data from all the sensor data accumulated in the sensor data accumulating DB 21 (step ST301). For example, assuming that operational statuses are classified with respect to sensor data collected from an air conditioner in summer and that "air outlet temperature" is set in advance as a sensing property to be used for failure determination, the to-be-classified data generating unit 11 extracts data a sensing property of which is "air outlet temperature" from all the sensor data for three months of the most recent July to September as to-be-classified data generation data, and obtains to-be-classified data by associating the extracted data of "air outlet temperature" with the date and time when the sensor data is collected.

Note that the to-be-classified data generating unit 11 extracts sensor data from the sensor data accumulating DB 21 in a state where information of collection date and time is associated to the sensor data as a collection timing of the sensor data.

The to-be-classified data generating unit 11 outputs the acquired to-be-classified data to the division candidate selecting unit 12.

The division candidate selecting unit 12 selects, as division candidates, boundary lines serving as candidates for dividing the value range of the to-be-classified data acquired by the to-be-classified data generating unit 11 (step ST302).

In the classification of operational statuses in the operational status classification device 1 according to the first embodiment, classification is finally performed into each operational status in which a value range of the to-be-classified data is divided. In this step ST302, the division candidate selecting unit 12 selects values to be candidates for division when the value range of the to-be-classified data are finally divided. Therefore, boundary lines selected as division candidates by the division candidate selecting unit 12 serve as boundary lines for values of the to-be-classified data when the value range of the to-be-classified data are divided as finely as possible.

Specifically, as illustrated in FIG. 4 for example, the division candidate selecting unit 12 selects, as division candidates, boundary lines obtained by dividing a value range of to-be-classified data into a predetermined number of divisions nₛₚ at equal intervals. Note that the number of divisions nₛₚ may be determined in advance by an administrator or the like of the monitoring target 3.

The processing performed by the division candidate selecting unit 12 is not limited to the above, and the processing below may be alternatively performed, for example. The administrator or the like of the monitoring target 3 determines in advance the average number of samples to be included in one divided section obtained by dividing the value range by division candidates as n in the division candidate selecting unit 12. The division candidate selecting unit 12 calculates the number of divisions as a ratio with the number of all the pieces of the to-be-classified data N, that is, N/n, and selects, as division candidates, boundary lines obtained by division into the calculated number of divisions at equal intervals.

Note that, in this example, pieces of to-be-classified data divided by division candidates are also referred to as samples, in particular.

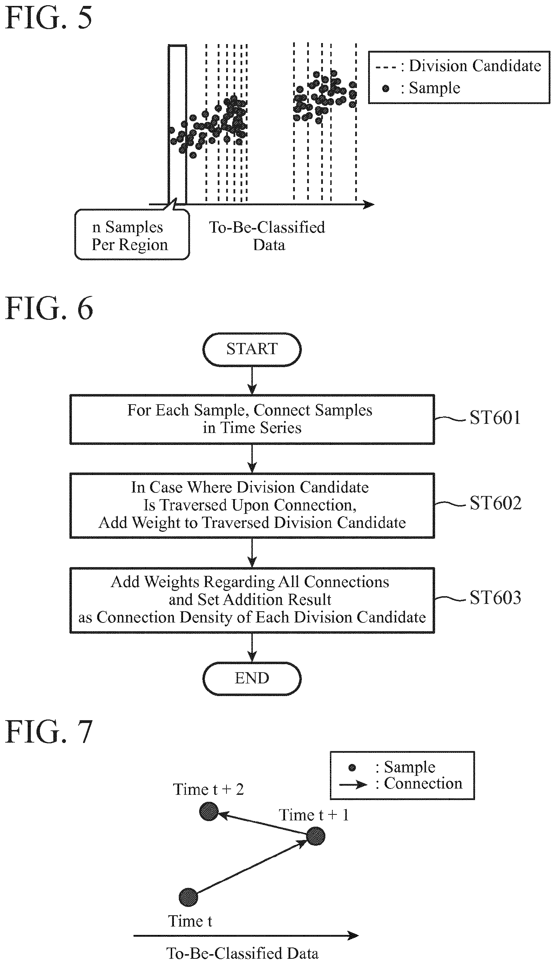

Further, the following processing may be performed alternatively, for example. The administrator or the like of the monitoring target 3 determines in advance the number of samples to be included in one divided section as n, and as illustrated in FIG. 5, the division candidate selecting unit 12 selects, as division candidates, boundary lines obtained by dividing the value range such that the number of samples included in the value range of the to-be-classified data is divided into n number of samples sequentially from smaller samples or larger samples in the value range of the to-be-classified data.

Further alternatively, the following processing may be performed, for example. The administrator or the like of the monitoring target 3 determines the number of divisions in advance. The division candidate selecting unit 12 uses, as the number of samples to be included in one divided section, the result obtained by dividing the number of all the pieces of the to-be-classified data N by the determined number of divisions, and selects, as division candidates, boundary lines obtained by dividing the value range of the to-be-classified data such that the above number of samples are included in one divided section from smaller samples or larger samples in the value range of the to-be-classified data.

Note that any of the above is merely an example, and the division candidate selecting unit 12 may select division candidates by other methods as long as boundary lines of values obtained by dividing the value range of the to-be-classified data as finely as possible are selected as division candidates.

The division candidate selecting unit 12 outputs the information of the selected division candidates to the connection density calculating unit 13.

The connection density calculating unit 13 calculates the strength of temporal connection of all the division candidates selected by the division candidate selecting unit 12, that is, connection densities (step ST303).

FIG. 6 is a flowchart illustrating in detail the operation of the connection density calculating unit 13 for calculating connection densities in the first embodiment.

First, as illustrated in FIG. 6, the connecting unit 131 of the connection density calculating unit 13 connects pieces of to-be-classified data as samples in time series (step ST601). Specifically, the connecting unit 131 connects a target sample to a sample adjacent thereto in time series. For example, assuming that a cycle at which sensor data is collected, that is, a sampling cycle is one minute and that a target sample is a sample collected at 9:15 on July 15, samples adjacent to the sample collected at 9:15 are the samples collected at 9:14 and 9:16 on the same day. Therefore, the connecting unit 131 connects the sample collected at 9:14 on July 15, the sample collected at 9:15 on the same day, and the sample collected at 9:16 on the same day. Note that a target sample may be set in advance by the administrator or the like of the monitoring target 3.

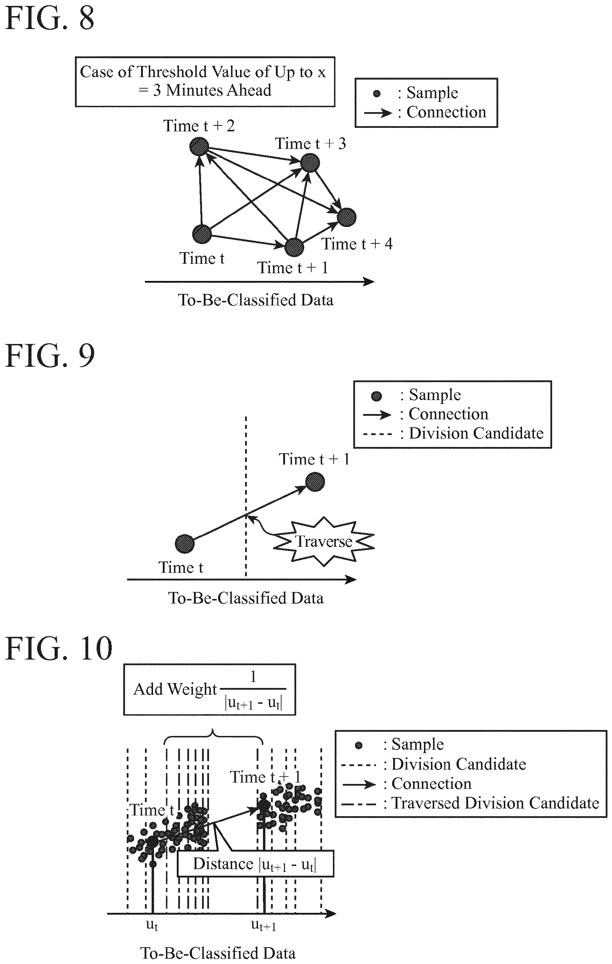

Alternatively, the following processing may be performed, for example. The administrator or the like of the monitoring target 3 sets in advance a threshold value x on how many samples ahead in time series are to be connected. The connecting unit 131 connects samples as long as they are within a range less than or equal to the threshold value x, even if they are not adjacent to each other, as illustrated in FIG. 8. Alternatively, a threshold value may not be provided, and in such a case, the connecting unit 131 connects any sample to all other samples.

Next, the calculating unit 132 of the connection density calculating unit 13 determines whether the connection lines connecting the samples in step ST601 traverse a boundary line selected as a division candidate in step ST302 of FIG. 3 by the division candidate selecting unit 12, and in the case of traversing, a weight value obtained from samples at both ends of the connection line is added to the traversed division candidate (step ST602).

In FIG. 9, an exemplary concept of connecting between samples and traversing in the first embodiment is illustrated.

As illustrated in FIG. 9, when a connection line connecting two samples adjacent in time series traverses a division candidate, that is, when the value range between the two samples that are adjacent in time series crosses value ranges which are divided by division candidates, the calculating unit 132 determines that the connection line of the two samples traverses the boundary line. Specifically, for example, in a case where a value indicated by a boundary line as a division candidate is included in a value range of the to-be-classified data pinched by the two samples, it can be determined as traversing.

The calculating unit 132 calculates the weight value to be added to the division candidate when the connection line connecting the samples is determined to traverse the division candidate by, for example, using the reciprocal of the Euclidean distance based on values of the to-be-classified data in each of the two samples. The equation for calculating the weight value is based on the ideas that the closer the values of pieces of the to-be-classified data are, the more similar the operational statuses are and that when two samples are close in terms of time series and values, the division candidate is likely to divide division sections having a high connection density.

FIG. 10 is a diagram for explaining exemplary operation of adding a weight value to a division candidate when the connection density calculating unit 13 connects samples and the connection line of the connected samples traverses the division candidate.

In FIG. 10, for example, a case where the samples change from time t to time t + 1 is illustrated as an example.

First, the connecting unit 131 of the connection density calculating unit 13 connects samples at time t to samples at time t + 1 (see step ST601). Next, the calculating unit 132 extracts division candidates traversed in the connection. In this example, as illustrated in FIG. 10, the calculating unit 132 extracts division candidates indicated by dashed lines as division candidates traversed by connection lines connecting the samples at time t and the samples at time t + 1.

Then, with respect to the pieces of the to-be-classified data as samples at both ends of each of the connection lines, that is, as the samples at time t and the samples at time t + 1, the calculating unit 132 calculates the reciprocal of the Euclidean distance (1/|uₜ + 1 - uₜ|) based on the values of the two pieces of the to-be-classified data and adds the result to the extracted division candidates as a weight value.

Note that the operation described with reference to FIG. 10 is merely an example. Without limiting to the distance between pieces of the to-be-classified data, the connection density calculating unit 13 may use, as the closeness of operational statuses, a statistical distance such as the Euclidean distance based on values of data, which is stored by the to-be-classified data generating unit as data not used for the to-be-classified data and is not used for the to-be-classified data, and add the reciprocal of the statistical distance to the extracted division candidates as a weight value.

Alternatively, the calculating unit 132 may use the number of connection lines traversing each division candidate as a weight value.

Alternatively, for example in the case where the connecting unit 131 connects samples other than the samples that are adjacent in time series such as "to connect samples up to x minutes ahead", the calculating unit 132 may use the reciprocal of a time length calculated on the basis of collection timings of samples at both ends of a connection line as a weight value. In a case where the connecting unit 131 connects each sample to all the other samples as described before, if the weighting is performed using a weight value based on the Euclidean distance, time-series factors are not taken into consideration. Therefore, the reciprocal of a time length calculated on the basis of collection timings of samples at both ends of a connection line is used as the weight value.

Further alternatively, the following processing may be performed. The connecting unit 131 extracts only the state in which the apparatus is stable from all the samples and connects samples adjacent to each other in time series out of the extracted samples. The calculating unit 132 calculates the weight value using only such connections of the samples adjacent to each other in time series.

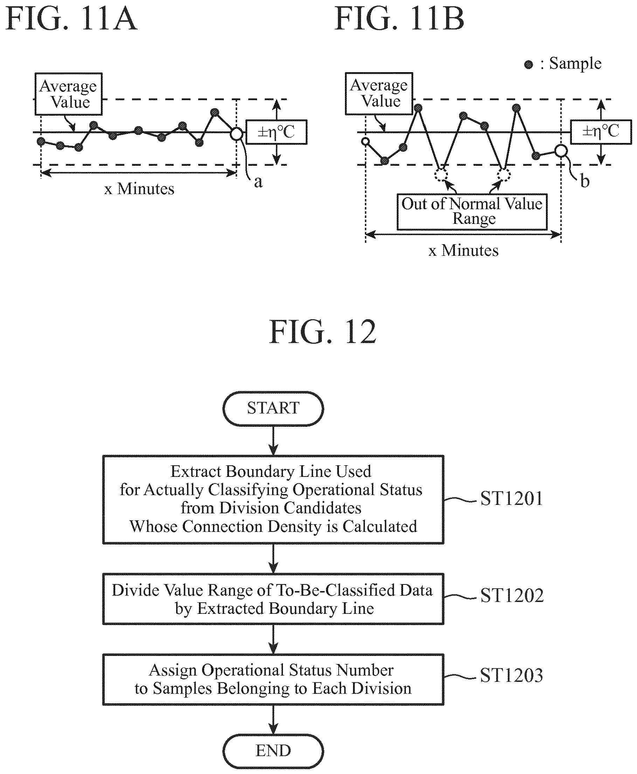

FIG. 11 is a diagram for explaining an exemplary concept of samples in a state in which an apparatus is stable in the first embodiment. FIG. 11A is an example of samples in a stable state, and FIG. 11B is an example of samples in an unstable state.

As illustrated in FIG. 11A, in the case where values of samples of a designated sensing property are within a certain range, for example a range of ± η °C of the average value for a certain period of time of x minutes, the connecting unit 131 extracts the sample as a sample in a stable state. In FIG. 11A, the sample extracted as a sample in the state in which the connecting unit 131 is stable is shown as an extraction target sample a. Note that it is assumed that the designated sensing property is set in advance by an administrator or the like of the monitoring target 3.

On the other hand, as illustrated in FIG. 11B, in the case where there is a value outside the range of ± η °C of the average value, that is, a value outside a normal value range for the certain period of time of x minutes, the connecting unit 131 does not extract the sample because it is in an unstable state. In FIG. 11B, a sample regarded as the one in an unstable state by the connection density calculating unit 13 is shown as a not to-be-extracted sample b.

In this manner, the connection density calculating unit 13 may calculate the weight value by appropriate methods; however, it is desirable that the connection density calculating unit 13 calculates the weight value such that a weight value of a division candidate in a region where pieces of data close in time series are dense is large.

Note that the to-be-classified data generating unit 11 may use only the sensor data in a state where the apparatus is stable for generating the to-be-classified data on the basis of the concept of a sample in a stable state of the apparatus which is described with reference to FIGS. 11A and 11B. Specifically, the to-be-classified data generating unit 11 may use, as the to-be-classified data, data included in a predetermined sensing property and in a stable state in time series out of data of sensing properties included in each of a plurality of pieces of sensor data in a predetermined period.

The calculating unit 132 performs the processing of the above step ST602 on all the connections connected by the connecting unit 131 in step ST601 and, for all of the division candidates, calculates the sum of weight values for each of the division candidates, and uses the calculated sum as the connection density for each of the division candidates (step ST603).

The calculating unit 132 outputs the information of the calculated connection densities to the classifying unit 14.

Let us refer back to the flowchart of FIG. 3.

The classifying unit 14 classifies the to-be-classified data into respective operational statuses using the connection density for each of the division candidates calculated by the connection density calculating unit 13 (step ST304). Specifically, the classifying unit 14 performs the classification into respective operational status by extracting division candidates, that is, boundary lines, to be actually used for classification of operational statuses from all the division candidates selected by the division candidate selecting unit 12 using the connection density for each of the division candidates, and dividing the value range of the to-be-classified data at the extracted boundary lines.

Here, FIG. 12 is a flowchart for explaining in detail the operation of the classifying unit 14 for classifying to-be-classified data into respective operational statuses in the first embodiment.

First, the classifying unit 14 uses the connection density for each of the division candidates calculated by the connection density calculating unit 13 in step ST303 of FIG. 3 and extracts division candidates, that is, boundary lines, to be actually used for classification of the operational statuses from among all the division candidates such that the to-be-classified data is classified into each cluster having a high connection density (step ST1201).

The classifying unit 14 is only required to extract the boundary lines used for actual classification of the operational statuses on the basis of a preset ratio p, for example. Specifically, the classifying unit 14 is only required to extract division candidates included in the top p of connection densities in the ascending order for the respective division candidates. Note that the ratio p may be set in advance by, for example, the administrator or the like of the monitoring target 3.

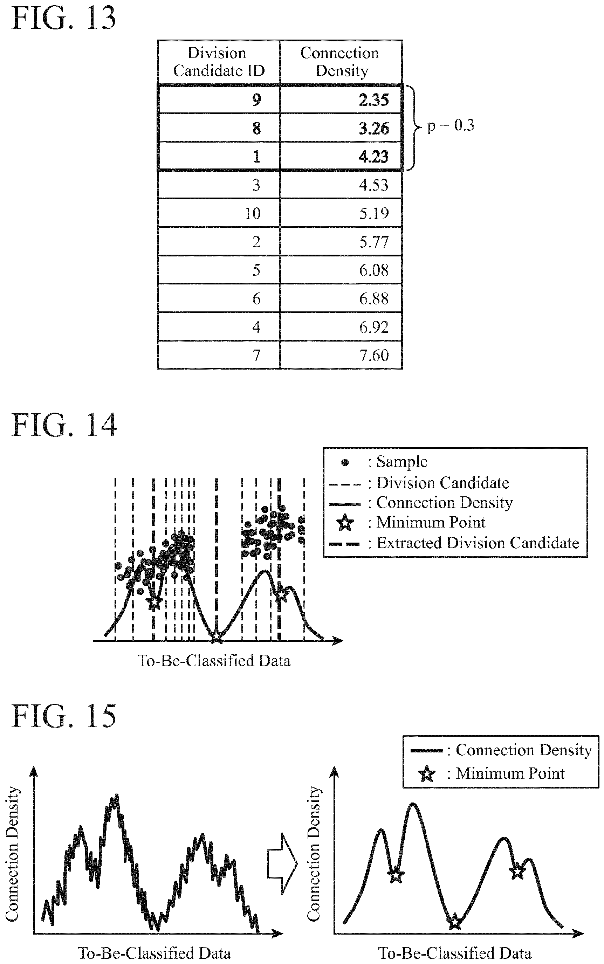

FIG. 13 is a table for explaining an exemplary method of the classifying unit 14 for extracting division candidates on the basis of a preset ratio p in the first embodiment.

For example, it is assumed that a division candidate ID is assigned to each of the division candidates, and a ratio of p = 0.3 is set. In FIG. 13, an image in which the division candidate IDs are rearranged such that connection densities are in the ascending order is illustrated.

Since the ratio of p = 0.3 is set in this example, as illustrated in FIG. 13, the classifying unit 14 extracts, as the boundary lines to be used for actual classification of operational statuses, the upper 30% of division candidates arranged in the ascending order of the connection densities, that is, division candidates having division candidate IDs of 9, 8, and 1.

Note that this is merely an example, and the classifying unit 14 may extract boundary lines to be used for actual classification of the operational statuses by other methods.

For example, as illustrated in FIG. 14, the classifying unit 14 may connect connection densities from a smaller endpoint of the division candidates and extract, as boundary lines to be used for actual classification of the operational statuses, division candidates that pass through minimum points of the connection line.

Further, for example as illustrated in FIG. 15, in the case where connection density changes finely and the number of minimum points are excessively large, the classifying unit 14 may use a known moving average method or any smoothing method by a low pass filter such as distribution estimation by Kernel smoothing to smooth the changes in the connection densities and extract boundary lines used for actual classification of the operational statuses by the abovementioned method as described with reference to FIG. 14.

The classifying unit 14 uses the division candidates extracted in step ST1201 as the boundary lines for classifying the operational statuses and divides the value range of the to-be-classified data by the boundary lines (step ST1202).

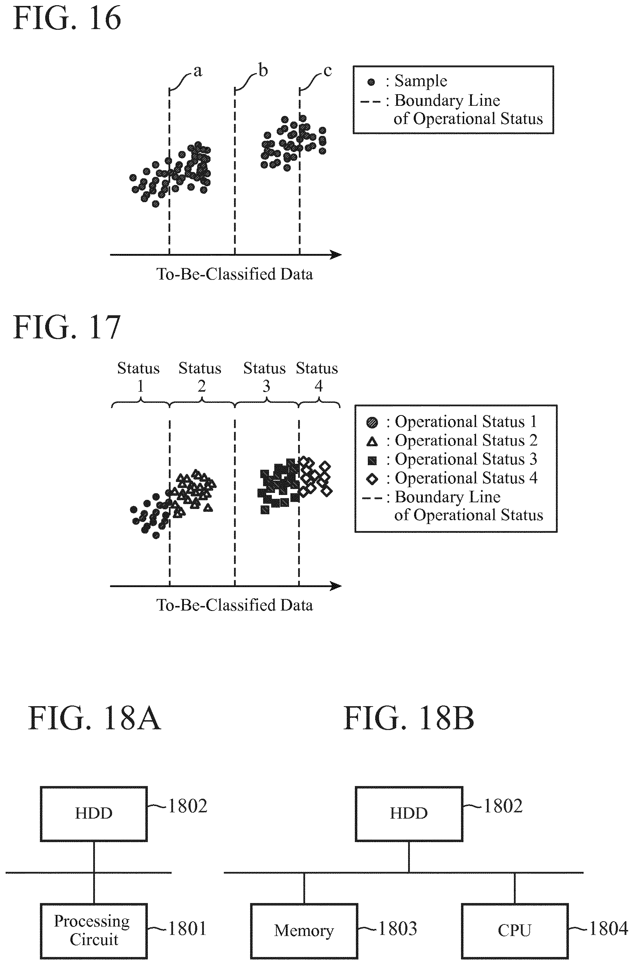

FIG. 16 is a graph illustrating an image of an example in which the value range of to-be-classified data are divided by the classifying unit 14 in the first embodiment.

FIG. 16 illustrates a state where the classifying unit 14 extracts three division candidates (a to c in FIG. 16) out of all the division candidates as boundary lines used for actual classification of the operational statuses and where the to-be-classified data is divided by the three boundary lines.

Next, the classifying unit 14 assigns an operational status number to samples belonging to each of the divided sections for the to-be-classified data divided in step ST1202 (step ST1203).

FIG. 17 is a graph illustrating an image of an example in which the classifying unit 14 assigns an operational status number to classified samples belonging to each of the divided sections in the first embodiment.

Note that FIG. 17 illustrates an example where operational status numbers are assigned to the samples of the to-be-classified data divided as illustrated in FIG. 16.

As illustrated in FIG. 17, the classifying unit 14 assigns operational status numbers from, for example, an endpoint of the to-be-classified data, that is, from the smaller endpoint in FIG. 17. At this time, the classifying unit 14 assigns the same operational status number to samples belonging to the same divided section. That is, the classifying unit 14 assigns the same number of operational status numbers as the number of divisions of the value range of the to-be-classified data. Therefore, in FIG. 17, four operational status numbers of operational status 1 to operational status 4 are assigned.

Let us refer back to the flowchart of FIG. 3.

The classifying unit 14 accumulates the to-be-classified data assigned with operational status numbers in the classified sensor data accumulating DB 15 (step ST305).

In a control apparatus, it is general that change of the operational status is slow unless manual operation or change in control contents occurs. For this reason, it is considered that pieces of sensor data adjacent in time series belong to similar operational statuses.

As described above, the operational status classification device 1 of the first embodiment of the present invention enables classification of operational statuses of a control apparatus into a plurality of statuses, the operational statuses being similar within each of the plurality of statuses, reflecting the feature of an apparatus that, when each piece of sensor data is within a predetermined division width of each factor, the pieces of sensor data belong to similar operational statuses.

FIGS. 18A and 18B are diagrams illustrating exemplary hardware configurations of the operational status classification device 1 according to the first embodiment of the present invention.

In the first embodiment of the present invention, the functions of the to-be-classified data generating unit 11, the division candidate selecting unit 12, the connection density calculating unit 13, and the classifying unit 14 are implemented by a processing circuit 1801. That is, the operational status classification device 1 includes the processing circuit 1801 for calculating the connection density from samples and classifying operational statuses using the connection density.

The processing circuit 1801 may be dedicated hardware as illustrated in FIG. 18A or a central processing unit (CPU) 1804 for executing a program stored in a memory 1803 as illustrated in FIG. 18B.

In a case where the processing circuit 1801 is dedicated hardware, the processing circuit 1801 corresponds to, for example, a single circuit, a composite circuit, a programmed processor, a parallel programmed processor, an application specific integrated circuit (ASIC), a field-programmable gate array (FPGA), or a combination thereof.

In the case where the processing circuit 1801 corresponds to the CPU 1804, the function of each of the to-be-classified data generating unit 11, the division candidate selecting unit 12, the connection density calculating unit 13, and the classifying unit 14 are implemented by software, firmware, or a combination of software and firmware. That is, the to-be-classified data generating unit 11, the division candidate selecting unit 12, the connection density calculating unit 13, and the classifying unit 14 are implemented by a processing circuit such as the CPU 1804, a system large scale integration (LSI) that execute programs stored in a hard disk drive (HDD) 1802, the memory 1803, and the like. It is also said that programs stored in the HDD 1802, the memory 1803, and the like causes a computer to execute the procedures and methods of the to-be-classified data generating unit 11, the division candidate selecting unit 12, the connection density calculating unit 13, and the classifying unit 14. Here, the memory 1803 may be a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disc, a flexible disc, an optical disc, a compact disc, a mini disc, a digital versatile disk (DVD), or the like.

Note that some of the functions of the to-be-classified data generating unit 11, the division candidate selecting unit 12, the connection density calculating unit 13, and the classifying unit 14 may be implemented by dedicated hardware while the others may be implemented by software or firmware. For example, the function of the to-be-classified data generating unit 11 may be implemented by the processing circuit 1801 as dedicated hardware while the functions of the division candidate selecting unit 12, the connection density calculating unit 13, and the classifying unit 14 may be implemented by the processing circuit reading and executing programs stored in the memory 1803.

The classified sensor data accumulating unit 15 uses, for example, the HDD 1802. Note that this is merely one example, and the classified sensor data accumulating unit 15 may be configured by a DVD, the memory 1803, or the like.

As described above, according to the first embodiment, it is possible to classify operational statuses of an apparatus into a plurality of statuses, the operational statuses being similar within each of the plurality of statuses, reflecting the feature of the apparatus that, when pieces of sensor data are within a predetermined division width of each factor, the pieces of sensor data belong to similar operational statuses.

Note that the operational status classification device 1 is configured as illustrated in FIG. 2 in the first embodiment and that the effects as described above can be obtained because the operational status classification device 1 includes the to-be-classified data generating unit 11, the division candidate selecting unit 12, the connection density calculating unit 13, and the classifying unit 14.

### INDUSTRIAL APPLICABILITY

Since the operational status classification device according to the present invention is configured so as to be capable of classifying operational statuses with high accuracy by reflecting features of apparatuses, the present invention can be applied to an operational status classification device or similar devices that generates classification of sensor data, which is acquired from sensors installed in control apparatuses in a control system such as an elevator, a plant device, and an air conditioner, into respective operational statuses.

### REFERENCE SIGNS LIST

1: Operational status classification device, 2: Data collecting and accumulating device, 3: Monitoring target, 4: Sensor network, 11: To-be-classified data generating unit, 12: Division candidate selecting unit, 13: Connection density calculating unit, 14: Classifying unit, 15: Classified sensor data accumulating DB, 21: Sensor data accumulating DB, 131: Connecting unit, 132: Calculating unit, 1801: Processing circuit, 1802: HDD, 1803: Memory, 1804: CPU.

## Claims

1. An operational status classification device (1), comprising:
a to-be-classified data generating unit (11) configured to generate to-be-classified data from a plurality of pieces of sensor data collected from an apparatus;
a division candidate selecting unit (12) configured to select, as division candidates, candidates of boundary lines used to divide a value range of the to-be-classified data generated by the to-be-classified data generating unit (11); **characterized by**
a connection density calculating unit (13) configured to calculate, for each of the division candidates selected by the division candidate selecting unit (12), a connection density representing closeness of collection timings between pieces of the to-be-classified data divided by each of the division candidates; and
a classifying unit (14) configured to extract division candidates to be used for classifying the operational statuses from among the division candidates using the connection density calculated by the connection density calculating unit (13), and to classify pieces of the to-be-classified data into respective operational statuses by dividing the value range of the to-be-classified data using the extracted division candidates.

2. The operational status classification device according to claim 1,
wherein the to-be-classified data generating unit (11) is configured to extract data of a preset sensing property from the plurality of pieces of sensor data as the to-be-classified data.

3. The operational status classification device according to claim 1,
wherein the to-be-classified data generating unit (11) is configured to generate data being linear combination of pieces of data of a plurality of respective preset sensing properties extracted from the plurality of pieces of sensor data as the to-be-classified data.

4. The operational status classification device according to claim 1,
wherein the to-be-classified data generating unit (11) is configured to generate a main component calculated on the basis of data of a preset sensing property included in the plurality of pieces of sensor data as the to-be-classified data.

5. The operational status classification device according to claim 1,
wherein the to-be-classified data generating unit (11) is configured to generate data of a preset sensing property included in the plurality of pieces of sensor data, the data of the preset sensing property being in a stable state in terms of time series as the to-be-classified data, where in the stable state values of samples of the preset sensing property are within a certain range.

6. The operational status classification device according to claim 1,
wherein the division candidate selecting unit (12) is configured to select, as the division candidates, boundary lines dividing the value range of the to-be-classified data into a preset number of sections at equal intervals.

7. The operational status classification device according to claim 6,
wherein the division candidate selecting unit (12) is configured to calculate the preset number of sections on the basis of a ratio between the number of all the pieces of the to-be-classified data and a preset average number of pieces of the to-be-classified data per each of the sections in a case where the value range is divided by the division candidates.

8. The operational status classification device according to claim 1,
wherein the division candidate selecting unit (12) is configured to select, as the division candidates, boundary lines dividing the value range of the to-be-classified data sequentially from an endpoint of the value range such that, in a case where the value range is divided into sections by the division candidates, the number of pieces of the to-be-classified data per each of the sections is a preset number.

9. The operational status classification device according to claim 8,
wherein the division candidate selecting unit (12) is configured to use, as the number of pieces of the to-be-classified data per each of the section, a number obtained by dividing the number of all the pieces of the to-be-classified data by a preset number of divisions.

10. The operational status classification device according to claim 1,
wherein the connection density calculating unit (13) comprises: a connecting unit (131) configured to connect pieces of the to-be-classified data in accordance with a time series of collection timings of the pieces of the to-be-classified data; and a calculating unit (132) configured to calculate the connection density of each of the division candidates by, in a case where at least one connection line connected by the connecting unit (131) traverses one of the division candidates, to add a weight value, obtained on the basis of pieces of the to-be-classified data connected by the at least one connection line, to the one of the division candidates traversed by the at least one connection line, and to use a result of the adding of each of the division candidates as the connection density of each of the division candidates.

11. The operational status classification device according to claim 10,
wherein the connecting unit (131) is configured to connect pieces of the to-be-classified data that are adjacent in time series.

12. The operational status classification device according to claim 10,
wherein the connecting unit (131) is configured to connect all pieces of the to-be-classified data.

13. The operational status classification device according to claim 10,
wherein the connecting unit (131) is configured to connect pieces of the to-be-classified data which are within a range that is less than or equal to a threshold value to each other in time series.

14. The operational status classification device according to claim 10,
wherein the connecting unit (131) is configured to extract the to-be-classified data in a state in which the apparatus is stable and connects pieces of the extracted to-be-classified data, where in the stable state values of samples of the to-be-classified data are within a certain range.

15. The operational status classification device according to claim 10,
wherein the calculating unit (132) is configured to calculate the connection density using the number of the at least one connection line traversing each of the division candidates as the weight value.

16. The operational status classification device according to claim 10,
wherein the calculating unit (132) is configured to calculate the connection density using a reciprocal of a Euclidean distance between both ends of the connection line obtained from values of pieces of the to-be-classified data as the weight value.

17. The operational status classification device according to claim 10,
wherein the calculating unit (132) is configured to calculate the connection density using a reciprocal of a time length between pieces of the to-be-classified data at both ends of the connection line as the weight value.

18. The operational status classification device according to claim 10,
wherein the calculating unit (132) is configured to calculate the connection density using a reciprocal of a Euclidean distance as the weight value, the reciprocal of the Euclidean distance being obtained from values of data of a plurality of sensing properties included in the plurality of pieces of sensor data, the data of the plurality of sensing properties not used for generating the to-be-classified data by the to-be-classified data generating unit (11).

## Patentansprüche

1. Betriebszustand-Klassifizierungseinrichtung (1), umfassend:
eine Zu-Klassifizierende-Daten-Erzeugungseinheit (11), die eingerichtet ist, zu klassifizierende Daten aus einer Vielzahl von Sensordatenstücken, die von einer Vorrichtung erhoben werden, zu erzeugen;
eine Teilungskandidat-Auswahleinheit (12), die eingerichtet ist, als Teilungskandidaten Kandidaten von Grenzlinien auszuwählen, die verwendet werden, um einen Wertebereich der durch die Zu-Klassifizierende-Daten-Erzeugungseinheit (11) erzeugten zu klassifizierenden Daten zu unterteilen;
**gekennzeichnet durch**
eine Verbindungsdichte-Berechnungseinheit (13), die eingerichtet ist, für jeden der durch die Teilungskandidat-Auswahleinheit (12) ausgewählten Teilungskandidaten eine Verbindungsdichte zu berechnen, die eine Nähe von Erhebungszeitpunkten zwischen den zu klassifizierenden Datenstücken geteilt durch jeden der Teilungskandidaten darstellt; und
eine Klassifizierungseinheit (14), die eingerichtet ist, Teilungskandidaten, die zur Klassifizierung der Betriebszustände verwendet werden sollen, aus den Teilungskandidaten unter Verwendung der von der Verbindungsdichte-Berechnungseinheit (13) berechneten Verbindungsdichte zu extrahieren und zu klassifizierende Datenstücke durch Teilen des Wertebereichs der zu klassifizierenden Daten unter Verwendung der extrahierten Teilungskandidaten in entsprechende Betriebszustände zu klassifizieren.

2. Betriebszustand-Klassifizierungseinrichtung nach Anspruch 1,
wobei die Zu-Klassifizierende-Daten-Erzeugungseinheit (11) eingerichtet ist, Daten einer voreingestellten Erhebungseigenschaft aus der Vielzahl von Sensordatenstücken als die zu klassifizierenden Daten zu extrahieren.

3. Betriebszustand-Klassifizierungseinrichtung nach Anspruch 1,
wobei die Zu-Klassifizierende-Daten-Erzeugungseinheit (11) eingerichtet ist, Daten zu erzeugen, die eine Linearkombination von Datenstücken einer Vielzahl von jeweiligen voreingestellten Erhebungseigenschaften sind, die aus der Vielzahl von Sensordatenstücken als die zu klassifizierenden Daten extrahiert werden.

4. Betriebszustand-Klassifizierungseinrichtung nach Anspruch 1,
wobei die Zu-Klassifizierende-Daten-Erzeugungseinheit (11) eingerichtet ist, eine Hauptkomponente, die auf der Grundlage von Daten einer voreingestellten Erhebungseigenschaft berechnet wurde, die in der Vielzahl von Sensordatenstücken enthalten sind, als die zu klassifizierenden Daten zu erzeugen.

5. Betriebszustand-Klassifizierungseinrichtung nach Anspruch 1,
wobei die Zu-Klassifizierende-Daten-Erzeugungseinheit (11) eingerichtet ist, Daten einer voreingestellten Erhebungseigenschaft, die in der Vielzahl von Sensordatenstücken enthalten sind, als die zu klassifizierenden Daten zu erzeugen, wobei sich die Daten der voreingestellten Erhebungseigenschaft hinsichtlich einer Zeitfolge in einem stabilen Zustand befinden, wobei in dem stabilen Zustand Werte von Proben der voreingestellten Erhebungseigenschaft innerhalb eines bestimmten Bereichs liegen.

6. Betriebszustand-Klassifizierungseinrichtung nach Anspruch 1,
wobei die Teilungskandidat-Auswahleinheit (12) eingerichtet ist, als die Teilungskandidaten Grenzlinien auszuwählen, die den Wertebereich der zu klassifizierenden Daten in eine voreingestellte Anzahl von Abschnitten in gleichen Intervallen teilen.

7. Betriebszustand-Klassifizierungseinrichtung nach Anspruch 6,
wobei die Teilungskandidat-Auswahleinheit (12) eingerichtet ist, die voreingestellte Anzahl von Abschnitten auf der Grundlage eines Verhältnisses zwischen der Anzahl aller zu klassifizierenden Datenstücke und einer voreingestellten Durchschnittsanzahl von zu klassifizierenden Datenstücken für jeden der Abschnitte in einem Fall, in dem der Wertebereich durch die Teilungskandidaten geteilt ist, zu berechnen.

8. Betriebszustand-Klassifizierungseinrichtung nach Anspruch 1,
wobei die Teilungskandidat-Auswahleinheit (12) eingerichtet ist, als die Teilungskandidaten Grenzlinien auszuwählen, die den Wertebereich der zu klassifizierenden Daten nacheinander von einem Endpunkt des Wertebereichs so teilen, dass in einem Fall, in dem der Wertebereich durch die Teilungskandidaten in Abschnitte geteilt ist, die Anzahl der zu klassifizierenden Datenstücke für jeden der Abschnitte eine voreingestellte Anzahl ist.

9. Betriebszustand-Klassifizierungseinrichtung nach Anspruch 8,
wobei die Teilungskandidat-Auswahleinheit (12) eingerichtet ist, als die Anzahl der zu klassifizierenden Datenstücke für jeden der Abschnitte eine Anzahl zu verwenden, die durch Teilen der Anzahl aller zu klassifizierenden Datenstücke durch eine voreingestellte Anzahl von Teilungen erhalten wird.

10. Betriebszustand-Klassifizierungseinrichtung nach Anspruch 1,
wobei die Verbindungsdichte-Berechnungseinheit (13) umfasst:
eine Verbindungseinheit (131), die eingerichtet ist, zu klassifizierende Datenstücke in Übereinstimmung mit einer Zeitfolge von Erhebungszeitpunkten der zu klassifizierenden Datenstücke zu verbinden; und
eine Berechnungseinheit (132), die eingerichtet ist, die Verbindungsdichte jeder der Teilungskandidaten in einem Fall, in dem zumindest eine Verbindungslinie, die durch die Verbindungseinheit (131) verbunden ist, einen der Teilungskandidaten durchquert, durch Hinzufügen eines Gewichtswert, der auf der Grundlage der zu klassifizierenden Datenstücke erhalten wird, die durch die zumindest eine Verbindungslinie mit dem einen der Teilungskandidaten, der durch die zumindest eine Verbindungslinie durchquert wird, verbunden sind, zu berechnen und ein Ergebnis des Hinzufügens jedes der Teilungskandidaten als die Verbindungsdichte jeder der Teilungskandidaten zu verwenden.

11. Betriebszustand-Klassifizierungseinrichtung nach Anspruch 10,
wobei die Verbindungseinheit (131) eingerichtet ist, zu klassifizierende Datenstücke, die in der Zeitfolge benachbart sind, zu verbinden.

12. Betriebszustand-Klassifizierungseinrichtung nach Anspruch 10,
wobei die Verbindungseinheit (131) eingerichtet ist, alle zu klassifizierenden Datenstücke zu verbinden.

13. Betriebszustand-Klassifizierungseinrichtung nach Anspruch 10,
wobei die Verbindungseinheit (131) eingerichtet ist, zu klassifizierende Datenstücke, die in einem Bereich liegen, der weniger als oder gleich wie ein Schwellenwert ist, miteinander in Zeitfolgen zu verbinden.

14. Betriebszustand-Klassifizierungseinrichtung nach Anspruch 10,
wobei die Verbindungseinheit (131) eingerichtet ist, die zu klassifizierenden Daten in einem Zustand, in dem die Vorrichtung stabil ist und extrahierte zu klassifizierende Datenstücke verbindet, zu extrahieren, wobei in dem stabilen Zustand Werte von Proben der zu klassifizierenden Daten innerhalb eines bestimmten Bereichs liegen.

15. Betriebszustand-Klassifizierungseinrichtung nach Anspruch 10,
wobei die Berechnungseinheit (132) eingerichtet ist, die Verbindungsdichte unter Verwendung der Anzahl der zumindest einen Verbindungslinie, die jeden der Teilungskandidaten durchquert, als Gewichtswert zu berechnen.

16. Betriebszustand-Klassifizierungseinrichtung nach Anspruch 10,
wobei die Berechnungseinheit (132) eingerichtet ist, die Verbindungsdichte unter Verwendung eines Kehrwerts eines euklidischen Abstands zwischen beiden Enden der Verbindungslinie, der aus Werten der zu klassifizierenden Datenstücke erhalten wird, als Gewichtswert zu berechnen.

17. Betriebszustand-Klassifizierungseinrichtung nach Anspruch 10,
wobei die Berechnungseinheit (132) eingerichtet ist, die Verbindungsdichte unter Verwendung eines Kehrwerts einer Zeitlänge zwischen den zu klassifizierenden Datenstücken an beiden Enden der Verbindungslinie als Gewichtswert zu berechnen.

18. Betriebszustand-Klassifizierungseinrichtung nach Anspruch 10,
wobei die Berechnungseinheit (132) eingerichtet ist, die Verbindungsdichte unter Verwendung eines Kehrwerts eines euklidischen Abstands als Gewichtswert zu berechnen, wobei der Kehrwert des euklidischen Abstands aus Datenwerten einer Vielzahl von Erhebungseigenschaften erhalten wird, die in der Vielzahl von Sensordatenstücken enthalten sind, wobei die Daten der Vielzahl von Erhebungseigenschaften nicht zum Erzeugen der durch die Zu-Klassifizierende-Daten-Erzeugungseinheit (11) zu klassifizierenden Daten verwendet werden.

## Revendications

1. Dispositif de classification d'état de fonctionnement (1), comprenant :
une unité de génération de données à classer (11) configurée de manière à générer des données à classer à partir d'une pluralité d'éléments de données de capteur collectés à partir d'un appareil ;
une unité de sélection de candidats de division (12) configurée de manière à sélectionner, en tant que candidats de division, des candidats de lignes de délimitation utilisées en vue de diviser une plage de valeurs des données à classer générées par l'unité de génération de données à classer (11) ;
**caractérisé par**
une unité de calcul de densité de connexion (13) configurée de manière à calculer, pour chacun des candidats de division sélectionnés par l'unité de sélection de candidats de division (12), une densité de connexion représentant une proximité de moments de collecte entre des éléments des données à classer divisées par chacun des candidats de division ; et
une unité de classification (14) configurée de manière à extraire des candidats de division à utiliser pour classer les états de fonctionnement parmi les candidats de division, en utilisant la densité de connexion calculée par l'unité de calcul de densité de connexion (13), et à classer des éléments des données à classer dans des états de fonctionnement respectifs, en divisant la plage de valeurs des données à classer, en utilisant les candidats de division extraits.

2. Dispositif de classification d'état de fonctionnement selon la revendication 1,
dans lequel l'unité de génération de données à classer (11) est configurée de manière à extraire des données d'une propriété de détection prédéfinie, de la pluralité d'éléments de données de capteur, en tant que les données à classer.

3. Dispositif de classification d'état de fonctionnement selon la revendication 1,
dans lequel l'unité de génération de données à classer (11) est configurée de manière à générer des données correspondant à une combinaison linéaire d'éléments de données d'une pluralité de propriétés de détection prédéfinies respectives extraites de la pluralité d'éléments de données de capteur en tant que les données à classer.

4. Dispositif de classification d'état de fonctionnement selon la revendication 1,
dans lequel l'unité de génération de données à classer (11) est configurée de manière à générer une composante principale calculée sur la base de données d'une propriété de détection prédéfinie incluse dans la pluralité d'éléments de données de capteur, en tant que les données à classer.

5. Dispositif de classification d'état de fonctionnement selon la revendication 1,
dans lequel l'unité de génération de données à classer (11) est configurée de manière à générer des données d'une propriété de détection prédéfinie incluse dans la pluralité d'éléments de données de capteur, les données de la propriété de détection prédéfinie étant dans un état stable en termes de séries chronologiques, en tant que les données à classer, où, dans l'état stable, des valeurs d'échantillons de la propriété de détection prédéfinie sont situées dans une certaine plage.

6. Dispositif de classification d'état de fonctionnement selon la revendication 1,
dans lequel l'unité de sélection de candidats de division (12) est configurée de manière à sélectionner, en tant que les candidats de division, des lignes de délimitation divisant la plage de valeurs des données à classer en un nombre prédéfini de sections à intervalles égaux.

7. Dispositif de classification d'état de fonctionnement selon la revendication 6,
dans lequel l'unité de sélection de candidats de division (12) est configurée de manière à calculer le nombre prédéfini de sections sur la base d'un rapport entre le nombre de tous les éléments des données à classer et un nombre moyen prédéfini d'éléments des données à classer pour chacune des sections, dans le cas où la plage de valeurs est divisée par les candidats de division.

8. Dispositif de classification d'état de fonctionnement selon la revendication 1,
dans lequel l'unité de sélection de candidats de division (12) est configurée de manière à sélectionner, en tant que les candidats de division, des lignes de délimitation divisant la plage de valeurs des données à classer, séquentiellement, à partir d'un point d'extrémité de la plage de valeurs, de sorte que, dans le cas où la plage de valeurs est divisée en des sections par les candidats de division, le nombre d'éléments des données à classer pour chacune des sections correspond à un nombre prédéfini.

9. Dispositif de classification d'état de fonctionnement selon la revendication 8,
dans lequel l'unité de sélection de candidats de division (12) est configurée de manière à utiliser, en tant que le nombre d'éléments des données à classer pour chacune des sections, un nombre obtenu en divisant le nombre de tous les éléments des données à classer par un nombre prédéfini de divisions.

10. Dispositif de classification d'état de fonctionnement selon la revendication 1,
dans lequel l'unité de calcul de densité de connexion (13) comprend :
une unité de connexion (131) configurée de manière à connecter des éléments des données à classer conformément à une série chronologique de moments de collecte des éléments des données à classer ; et
une unité de calcul (132) configurée de manière à calculer la densité de connexion de chacun des candidats de division, dans le cas où au moins une ligne de connexion connectée par l'unité de connexion (131) traverse l'un des candidats de division, à ajouter une valeur de pondération, obtenue sur la base d'éléments des données à classer connectés par ladite au moins une ligne de connexion, audit un des candidats de division traversé par ladite au moins une ligne de connexion, et à utiliser un résultat de l'ajout de chacun des candidats de division, en tant que la densité de connexion de chacun des candidats de division.

11. Dispositif de classification d'état de fonctionnement selon la revendication 10,
dans lequel l'unité de connexion (131) est configurée de manière à connecter des éléments des données à classer qui sont adjacents dans une série chronologique.

12. Dispositif de classification d'état de fonctionnement selon la revendication 10,
dans lequel l'unité de connexion (131) est configurée de manière à connecter tous les éléments des données à classer.

13. Dispositif de classification d'état de fonctionnement selon la revendication 10,
dans lequel l'unité de connexion (131) est configurée de manière à connecter des éléments des données à classer qui sont dans une plage qui est inférieure ou égale à une valeur de seuil, les uns aux autres, dans une série chronologique.

14. Dispositif de classification d'état de fonctionnement selon la revendication 10,
dans lequel l'unité de connexion (131) est configurée de manière à extraire les données à classer dans un état dans lequel l'appareil est stable et connecte des éléments des données à classer extraites, où, dans l'état stable, des valeurs d'échantillons des données à classer sont situées dans une certaine plage.

15. Dispositif de classification d'état de fonctionnement selon la revendication 10,
dans lequel l'unité de calcul (132) est configurée de manière à calculer la densité de connexion, en utilisant le nombre de ladite au moins une ligne de connexion traversant chacun des candidats de division, en tant que la valeur de pondération.

16. Dispositif de classification d'état de fonctionnement selon la revendication 10,
dans lequel l'unité de calcul (132) est configurée de manière à calculer la densité de connexion en utilisant une réciproque d'une distance euclidienne entre les deux extrémités de la ligne de connexion, obtenue à partir de valeurs d'éléments des données à classer, en tant que la valeur de pondération.

17. Dispositif de classification d'état de fonctionnement selon la revendication 10,
dans lequel l'unité de calcul (132) est configurée de manière à calculer la densité de connexion en utilisant une réciproque d'une durée entre des éléments des données à classer aux deux extrémités de la ligne de connexion, en tant que la valeur de pondération.

18. Dispositif de classification d'état de fonctionnement selon la revendication 10,
dans lequel l'unité de calcul (132) est configurée de manière à calculer la densité de connexion en utilisant une réciproque d'une distance euclidienne en tant que la valeur de pondération, la réciproque de la distance euclidienne étant obtenue à partir de valeurs de données d'une pluralité de propriétés de détection incluses dans la pluralité d'éléments de données de capteur, les données de la pluralité de propriétés de détection n'étant pas utilisées par l'unité de génération de données à classer (11) en vue de générer les données à classer.
